## Europäisches Patentamt

## European Patent Office

## Office européen des brevets

(11) Veröffentlichungsnummer: **0 042 573**
**B1**

(12) **EUROPÄISCHE PATENTSCHRIFT**

(45) Veröffentlichungstag der Patentschrift:
31.10.84

(51) Int. Cl.³: **F 16 B 13/04**

(21) Anmeldenummer: 81104621.8

(22) Anmeldetag: 16.06.81

(54) Isolierplatten-Dübel.

(30) Priorität: 21.06.80 DE 3023345

(43) Veröffentlichungstag der Anmeldung:
30.12.81 Patentblatt 81/52

(45) Bekanntmachung des Hinweises auf die Patenterteilung:
31.10.84 Patentblatt 84/44

(84) Benannte Vertragsstaaten:
AT BE CH FR GB IT LI NL SE

(56) Entgegenhaltungen:
EP - A - 0 034 346
CH - A - 476 924
CH - A - 514 079
DE - U - 7 616 020
DE - U - 8 003 317
FR - A - 2 398 907
GB - A - 1 461 967
US - A - 4 074 608

(73) Patentinhaber: Upat GmbH & Co, Freiburger Strasse 9 Postfach 1320, D-7830 Emmendingen (DE)

(72) Erfinder: Frischmann, Albert, Am Hungerberg 14, D-7835 Teningen 2 (DE)
Erfinder: Sternisa, Danilo, Köndringer Weg 13, D-7830 Emmendingen (DE)
Erfinder: Mermi, Kurt, Breitestrasse 10, D-7835 Teningen 2 (DE)

(74) Vertreter: Rackette, Karl, Dipl.-Phys. Dr.-Ing, Kaiser-Joseph-Strasse 179 Postfach 1310, D-7800 Freiburg (DE)

BUNDESDRUCKEREI BERLIN

## Beschreibung

Die Erfindung betrifft einen Isolierplatten-Dübel mit einem die Isolierplatte durchsetzenden Hohlschaft, der an seinem äußeren Ende einen flachen Halteteller und an seinem inneren Ende einen geschlitzten Spreizbereich aufweist, der durch Eintreiben eines Spreiznagels in den Hohlschaft aufweitbar ist.

Ein solcher Isolierplatten-Dübel ist insbesondere aus dem DE-U-7 615 114 bekanntgeworden. Bei dem bekannten Spreizdübel ist der Schaft dreiteilig ausgebildet und wird mittels eines zylindrischen Spreiznagels gespreizt. Der Dübelschaft des bekannten Isolierplatten-Dübels ist konisch ausgebildet, jedoch hat diese äußere Konizität den Nachteil, daß Bohrlochtoleranzen nur in einem sehr geringen Maß ausgeglichen werden können, so daß die Gefahr besteht, daß auch nach dem Eintreiben des Nagels die Dübelaußenwände nur teilweise oder nur mit geringem Spreizdruck gegen die Bohrlochwandung anliegen. Ein weiterer Nachteil des bekannten Isolierplatten-Dübels besteht darin, daß der Eintreibwiderstand des Nagels besonders bei harten Werkstoffen sehr groß werden kann. Wird der bekannte Dübel beispielsweise in Beton gesetzt, so besteht die Gefahr, daß der Spreiznagel nur bis zur Hälfte eingetrieben werden kann, da der Beton eine weitere Spreizung des Dübelschaftes nicht mehr zuläßt. Das überstehende Ende des Nagels müßte dann entfernt werden.

In der EP-A-34 346, die gemäß Art. 54 (3) EPÜ zum Stand der Technik gehört, ist ein Klemmkopf-Dübel aus Kunststoff mit einem eintreibbaren Spreiznagel beschrieben, dessen oberer Abschnitt, der einer oberen Spreizzone zugeordnet ist, einen größeren Durchmesser aufweist als dessen unterer Abschnitt, der in einer unteren Spreizzone wirksam wird. Sowohl in der oberen Spreizzone als auch in der unteren Spreizzone sind in der Kernbohrung des Dübelschaftes sich axial erstreckende Längsrippen vorgesehen. Da der obere Abschnitt des Spreiznagels einen größeren Außendurchmesser als der untere Abschnitt aufweist, ist es nur schwer möglich, das ggf. überstehende Ende abzuschneiden, wenn sich der Spreiznagel nicht ganz in den Dübel eintreiben läßt.

Der Erfindung liegt die Aufgabe zugrunde, einen Isolierplatten-Dübel zu schaffen, der sich schnell und einfach setzen läßt, ohne daß der Spreiznagel über den Halteteller hinausragt. Diese Aufgabe wird erfindungsgemäß dadurch gelöst, daß der Spreiznagel im Spreizbereich sowie in dem an den Spreizbereich angrenzenden Bereich des Hohlschaftes durch mehrere sich axial durch die Kernbohrung im Hohlschaft erstreckende Längsrippen geführt ist und an seinem Eintreibende in einem vorher bestimmten Abstand von der Nagelspitze eine als Sollbruchstelle wirkende Einschnürung aufweist. Dadurch kann in Abhängigkeit von dem Material der Tragschale eine Anpassung der Nagellänge in besonders einfacher und schneller Weise durchgeführt werden.

Eine zweckmäßige Weiterbildung der Erfindung besteht darin, daß der Spreiznagel in unmittelbarer Nähe seines Einschlagendes eine umlaufende Ringnut aufweist. Zweckmäßig ist das Einschlagende des Spreiznagels mit einem erweiterten Kopf versehen. Eine Dichtwulst in der Nähe des Einschlagendes des Spreiznagels verhindert das Eindringen von Feuchtigkeit in die Kernbohrung des Hohlschaftes.

In der Zeichnung ist ein Ausführungsbeispiel der Erfindung dargestellt. Es zeigt

Fig. 1 einen Isolierplatten-Dübel gemäß der Erfindung im eingesetzten Zustand in einem Schnitt,

Fig. 2 den Spreiznagel des Isolierplatten-Dübels gemäß Fig. 1 in einer vergrößerten Seitenansicht, in zwei Ausführungen,

Fig. 3 das vordere Ende des Isolierplatten-Dübels in eingesetztem Zustand in einem Hohlblockstein im Schnitt,

Fig. 4 das kopfseitige Ende des Isolierplatten-Dübels mit einem eine Ringnut aufweisenden Nagel, teilweise im Schnitt,

Fig. 5 den Spreizbereich und den an den Spreizbereich angrenzenden Bereich des Hohlschaftes eines Isolierplatten-Dübels in vergrößerter Darstellung im Schnitt,

Fig. 6 einen radialen Schnitt durch den Spreizbereich des Isolierplatten-Dübels entlang einer Linie VI-VI in Fig. 5,

Fig. 7 eine schematische Darstellung zur Verdeutlichung der Befestigung von Rödeldrähten an den Ringnuten der im Isolierplatten-Dübel eingetriebenen Spreiznägel, und

Fig. 8 eine schematische Darstellung eines Schnitts im rechten Winkel gemäß den Linien VIII-VIII zu der in Fig. 7 dargestellten Anordnung.

Der vorzugsweise aus Kunststoff hergestellte Isolierplatten-Dübel 1 besteht aus einem flachen Halteteller 2 und einem sich daran anschließenden Hohlschaft 3 mit einem zylindrischen Außendurchmesser. In dem Hohlschaft 3 ist eine Kernbohrung 4 ausgebildet, die zum Eintreiben eines Spreiznagels 5 dient.

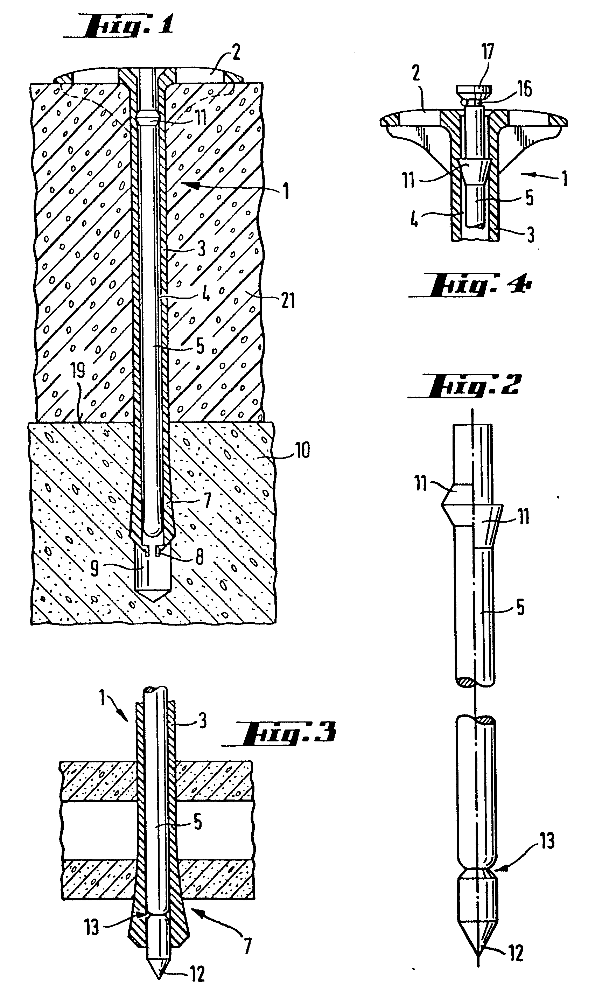

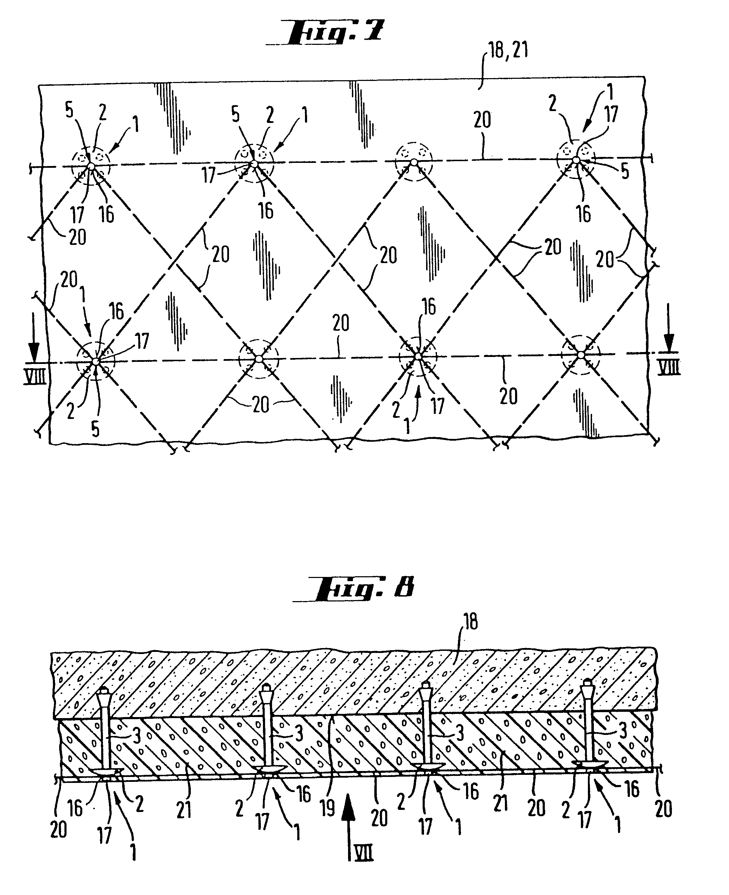

An dem dem Halteteller gegenüberliegenden Ende weist der Hohlschaft einen in Fig. 1 nicht sichtbaren, jedoch in den Fig. 5 und 6 dargestellten Schlitz 6 auf. Außerdem verengt sich die Kernbohrung 4 am Einsteckende des Hohlschaftes, das im folgenden als Spreizbereich 7 bezeichnet ist.

Beim Eintreiben eines Spreiznagels 5 erweitert sich, wie in Fig. 1 und 3 dargestellt ist, der Außendurchmesser des Spreizbereiches 7. Dabei wird eine beim Spritzgießen stehen gebliebene Kunststoffbrücke 8 zerrissen, die ein leichteres Einführen des Spreizbereiches in ein in Fig. 1 dargestelltes Bohrloch 9 in einer Tragschale 10 ermöglicht.

Am oberen Ende weist der Spreiznagel 5, wie in den Fig. 1, 2 und 4 dargestellt ist, eine Dichtwulst 11 auf. Diese Dichtwulst 11 kann, wie in der Zeichnung dargestellt, symmetrisch oder unsymmetrisch ausgebildet sein. Durch die an der Dichtwulst 11 vorhandene Dichtlippe wird ein Eindringen von Feuchtigkeit in die Kernbohrung 4 und somit eine Verfärbung der fertig montierten Fassade im Bereich des Dübels durch Feuchtigkeit verhindert.

Wie in den Fig. 2 und 3 dargestellt ist, weist der Spreiznagel 5 in der Nähe der Nagelspitze 12 in einem genau definierten Abstand vom Nagelende eine Einschnürung 13 auf. Diese Einschnürung hat die Funktion einer Sollbruchstelle und ermöglicht ein einfaches und schnelles Verkürzen des Spreiznagels 5, so daß der Isolierplatten-Dübel in vorteilhafter Weise in Beton oder in Gasbeton bzw. ähnlichen Baustoffen gesetzt werden kann. Durch die besondere Nagelausbildung mit der Einschnürung 13 kann in den genannten Baustoffen jeweils die volle Spreizung erreicht werden, ohne daß das kopfseitige Ende des Spreiznagels über den Halteteller 2 hinausragt. Wird der Isolierplatten-Dübel beispielsweise in Gasbeton gesetzt, so wird der Spreiznagel 5 mit seiner vollen Länge in die Kernbohrung 4 des Hohlschaftes 3 eingetrieben, wobei die Spitze 12 über das Ende des Spreizbereichs 7 hinausragt, und die Spreizung erfolgt insbesondere im Bereich an der Dübelspitze. Bei einer Verwendung in harten Baustoffen, wie beispielsweise Beton (Fig. 1), wird der Spreiznagel 5 bis zu seiner Einschnürung 13 gekürzt, und der Spreiznagel 5 kann infolge seiner kürzeren Länge ebenfalls mit seiner vollen Länge eingetrieben werden. Die erreichte Spreizung ist somit in einem harten Werkstoff bereits bei einem kürzeren Spreiznagel 5 ausreichend, um die geforderten Auszugswerte zu gewährleisten. Dabei hat der Benutzer die Gewähr, daß die optimale Spreizung tatsächlich erfolgt bzw. der optimale Spreizdruck vorhanden ist, weil der Nagel mit seiner vollen, definierten Länge eingetrieben wird.

Wie aus den Fig. 5 und 6 zu erkennen ist, ist die Kernbohrung 4 des Isolierplatten-Dübels 1 im Spreizbereich 7 sowie in dem an den Spreizbereich angrenzenden Bereich des Hohlschaftes 3 mit mehreren sich axial erstreckenden Längsrippen 14 versehen. Durch diese Maßnahme wird erreicht, daß die am Außenumfang des Hohlschaftes 3 angeordneten Lamellen 15 infolge des radial nach außen wirkenden Spreizdruckes gegen die Bohrlochwandung infolge der Durchmesservergrößerung gedrückt werden. Die sich zwischen dem Spreiznagel 5 und den Längsrippen 14 ergebende Linienberührung verringert dabei den Eintreibwiderstand des Spreiznagels 5.

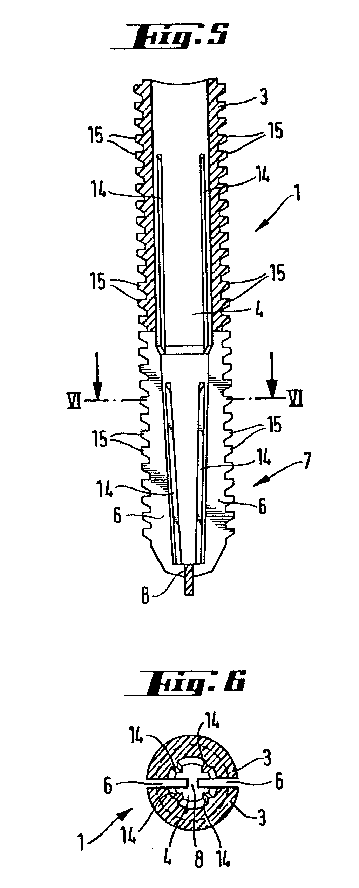

Wie in Fig. 4 erkennbar ist, weist der Spreiznagel 5 am Einschlagende eine umlaufende Ringnut 16 sowie einen sich daran anschließenden erweiterten Kopf 17 auf. Die Bedeutung der Ringnut 16 ergibt sich insbesondere im Zusammenhang mit den Fig. 7 und 8, die die Verwendung von Isolierplatten-Dübeln 1 mit jeweils einem Spreiznagel 5 zeigen, in dem am Einschlagende eine Ringnut 16 ausgebildet ist.

Wie in den Fig. 7 und 8 schematisch dargestellt ist, werden mehrere Isolierplatten-Dübel 1 in eine Tragschale 18, die ein Mauerwerk oder eine Betonwand sein kann, gesetzt. Der Halteteller 2 hat hierbei einen Abstand von etwa 3 bis 5 cm zur Oberseite 19 der Tragschale. Nach dem Einsetzen der Isolierplattendübel 1 wird ein Rödeldraht 20 von Spreiznagel 5 zu Spreiznagel 5 gespannt, wobei der Rödeldraht 20 jeweils um die Ringnut 16 gewickelt wird. Der Bereich zwischen der Oberseite 19 und dem aus den Rödeldrähten 20 bestehenden Gitter wird ausgeschäumt, wobei die Isolierplatten-Dübel 1 und der Rödeldraht 20 dem Schaum Halt geben. Nach dem Aushärten bildet die Schaumschicht eine Dämmplatte 21 bzw. die Dämmung der Wand. Durch die Verwendung des Rödeldrahtes 20 wird das Ausschäumverfahren wesentlich vereinfacht.

## Patentansprüche

1. Isolierplatten-Dübel mit einem die Isolierplatte (21) durchsetzenden Hohlschaft (3), der an seinem äußeren Ende einen flachen Halteteller (2) und an seinem inneren Ende einen geschlitzten Spreizbereich (7) aufweist, der durch Eintreiben eines Spreiznagels (5) in den Hohlschaft (3) aufweitbar ist, dadurch gekennzeichnet, daß der Spreiznagel (5) im Spreizbereich (7) sowie in dem an den Spreizbereich (7) angrenzenden Bereich des Hohlschaftes (3) durch mehrere sich axial durch die Kernbohrung (4) im Hohlschaft (3) erstreckende Längsrippen (14) geführt ist, und an seinem Eintreibende in einem vorher bestimmten Abstand von der Nagelspitze (12) eine als Sollbruchstelle wirkende Einschnürung (13) aufweist.

2. Isolierplatten-Dübel nach Anspruch 1, dadurch gekennzeichnet, daß der Spreiznagel (5) in unmittelbarer Nähe seines Einschlagendes eine umlaufende Ringnut (16) aufweist.

3. Isolierplatten-Dübel nach Anspruch 2, dadurch gekennzeichnet, daß am Einschlagende des Spreiznagels ein erweiterter Kopf (17) ausgebildet ist.

4. Isolierplatten-Dübel nach Anspruch 1 bis 3, dadurch gekennzeichnet, daß der Spreiznagel (5) in der Nähe des Einschlagendes über eine Dichtwulst (11) verfügt.

## Claims

1. A plug for an insulation plate, comprising a hollow shaft (3) passing through the insulation plate (21) and having at its outer end a flat retaining flange (2) and at its inner end a slitted expandable region (7) which can be expanded by the driving of an expansion nail (5) into the hollow shaft (3), characterised in that the expansion nail (5) is guidet, both in the expandable region (7) and in the region of the hollow shaft (3) adjacent to the expandable region (7), by a plurality of longitudinal ribs (14) extending axially through the core bore (4) in the hollow shaft (3) and has at its outer end, at a predetermined distance from the point (12) of the nail, a contraction (13) acting as a predetermined breaking point.

2. A plug for an insulation plate according to claim 1, characterised in that the expansion nail (5) has very close to its outer end a peripheral circular recess (16).

3. A plug for an insulation plate according to claim 2, characterised in that a widened head (17) is formed at the outer end of the expansion nail.

4. A plug for an insulation plate according to claim 1 to 3, characterised in that the expansion nail (5) has near its outer end a sealing bead (11).

## Revendications

1. Cheville pour plaques isolantes avec une tige creuse (3) traversant la plaque isolante (21), qui présente à son extrémité extérieure un plateau de retenue plat (2) et à son extrimité intérieure une zone d'expansion (7) fendue, qui peut être élargie par l'introduction d'un clou d'expansion (5) dans la tige creuse, caractérisé en ce que le clou d'expansion (5) est guidé dans la zone d'expansion (7) ainsi que dans la zone de la tige creuse (3) avoisinant la zone d'expansion (7), par plusieurs nervures longitudinales (14) s'étendant axialement à travers l'alésage central (4) dans la tige creuse (3) et présente à son extrémité d'introduction, à une distance de la pointe (12) du clou prédéterminée, un rétrécissement (13) faisant office de point de rupture théorique.

2. Cheville pour plaques isolantes selon la revendication 1, caractérisé en ce que le clou d'expansion (5) présente une rainure annulaire faisant le tour au voisinage immédiat de son extrémité d'enfoncement.

3. Cheville pour plaques isolantes selon la revendication 2, caractérisé en ce qu'une tête élargie (17) est formée à l'extrémitée d'enfoncement du clou d'expansion.

4. Cheville pour plaques isolantes selon la revendications 1 à 3, caractérisé en ce que le clou d'expansion (5) dispose au voisinage de l'extrémité d'enfoncement d'un bourrelet d'étanchéité (11).

Fig. 1

Fig. 4

Fig. 2

Fig. 3

Fig. 5

Fig. 6

## Fig. 7

## Fig. 8